# EUROPÄISCHE PATENTSCHRIFT

(11) **EP 0 625 247 B1**
(45) Veröffentlichungstag und Bekanntmachung des Hinweises auf die Patenterteilung: **19.06.1996**
(21) Anmeldenummer: 94901910.3
(22) Anmeldetag: 29.11.1993
(51) Int. Cl.: F16B 15/00, E04F 13/08, B25C 9/00

(54) **BEFESTIGUNGSSYSTEM MIT EINEM EINSCHLAGDÜBEL**
SECURING SYSTEM WITH A DRIVE-IN PLUG
SYSTEME DE FIXATION AVEC CHEVILLE A ENFONCER

(30) Priorität: 03.12.1992 DE 4240610
(43) Veröffentlichungstag der Anmeldung: 23.11.1994
(73) Patentinhaber: fischerwerke Artur Fischer GmbH & Co. KG, D-72178 Waldachtal (DE)
(72) Erfinder: SEIBOLD, Günter, D-72285 Pfalzgrafenweiler (DE)
(86) Internationale Anmeldenummer: EP9303345
(87) Internationale Veröffentlichungsnummer: WO9412798

(56) Entgegenhaltungen:
- DE-A- 2 234 037
- US-A- 1 851 112

## Beschreibung

Die Erfindung betrifft ein Befestigungssystem mit einem Einschlagdübel gemäß Oberbegriff des Anspruchs 1.

Zur Befestigung von Dämmstoffplatten oder dergleichen an einem Mauerwerk aus Gasbetonsteinen ist es bekannt, in Bohrlöcher des Mauerwerks Einschlagdübel einzuschlagen, bis deren gewölbter Befestigungsflansch an der Oberfläche der zu befestigenden Dämmstoffplatte mit Spannung anliegt. Der gewölbte Halteflansch des aus elastischem Material bestehenden Einschlagdübels erhält durch die mechanische Spannung eine in etwa ebene Flanschform. Bei diesen bekannten Einschlagdübeln, die auch als Dämmstoffhalter bezeichnet werden, ist es erforderlich, daß die Position der im Mauerwerk befindlichen Bohrlöcher beim Einschlagen des Einschlagdübels exakt getroffen wird.

Der Erfindung liegt die Aufgabe zugrunde, ein Befestigungssystem mit einem Einschlagdübel zu schaffen, bei dem ein Vorbohren des Mauerwerks aus Gasbeton oder dergleichen Material nicht mehr erforderlich ist.

Die Lösung dieser Aufgabe erhält man durch die im Anspruch 1 angegebenen Merkmale. Das Befestigungssystem besteht aus einem Einschlagdorn und dem eine Axialbohrung aufweisenden Einschlagdübel, der eine in Einschlagrichtung zeigende Spitze hat. Beim Einschlagvorgang stabilisiert der Einschlagdorn den Einschlagdübel und liegt an diesem an einer dafür vorgesehenen Anlagefläche in axialer Richtung an. Vorzugsweise liegt der Dorn im Bereich des Öffnungsrandes und gleichzeitig an der Grundfläche der Axialbohrung an. Auf diese Weise wird eine optimale Kräfteübertragung während des Einschlagvorganges auf den Einschlagdübel gewährleistet, wobei der nahezu über die gesamte Länge des Einschlagdübels im innern verlaufende Einschlagdorn eine optimale Stabilisierung des Einschlagdübels auch bezüglich auftretender radialer Kräfte mit sich bringt.

Versuche haben gezeigt, daß mit einem derart ausgebildeten Befestigungssystem ein problemloses Eintreiben des Einschlagdübels in Gasbeton unterschiedlicher Güte möglich ist. Ein derart verankerter Einschlagdübel besitzt auch gute Haltewerte, die ein sicheres Befestigen von Dämmplatten gewährleisten.

Die Spitze des Einschlagdübels ist vorzugsweise als Kegel mit einem Winkel von annähernd 90° oder mit in stumpfem Winkel verlaufender Mantelfläche ausgebildet, dessen Grundfläche die Grundfläche der Axialbohrung des Einschlagdübels bildet. Die sich dadurch ergebende, verhältnismäßig stumpfe Spitze hat einerseits den Vorteil, daß diese das Eindringen des Einschlagdübels in das Mauerwerk erleichtert und andererseits beim Einschlagvorgang nicht nennenswert deformiert wird. Insbesondere bei Gasbeton mit hoher Dichte ist es sehr vorteilhaft, wenn der Einschlagdorn unmittelbar im Bereich der Spitze diese an der Grundfläche der Axialbohrung abstützt.

Durch die Verwendung eines Einschlagdorns aus Stahl kann der Einschlagdübel aus Kunststoff als einstückiges Spritzteil hergestellt werden.

Die Handhabung des Befestigungssystems wird weiterhin erheblich dadurch erleichtert, daß der Einschlagdorn einen kleineren Außendurchmesser hat als der Durchmesser der Axialbohrung des Einschlagdübels. Auf diese Weise wird nicht nur die Einführung des Einschlagdorns in die Axialbohrung erleichtert, sondern insbesondere ein Verklemmen zwischen Einschlagdorn und Einschlagdübel während des Einschlagvorganges verhindert. Beim Eintreiben des Einschlagdübels treten nämlich auch radial von außen auf den Einschlagdübel wirkende Kräfte auf, die einen eng in der Axialbohrung sitzenden Einschlagdorn mit dem Einschlagdübel verspannen könnten.

Zur Erhöhung der Stabilität und zur Verspannung besteht die Möglichkeit, einen stabilisierenden Kern in den Einschlagdübel nach dessen Verankerung im Mauerwerk einzusetzen.

Die Erfindung wird nachfolgend anhand von in der Zeichnung dargestellten Ausführungsbeispielen näher erläutert.

Es zeigen:
Figur 1 das Befestigungssystem mit einem bis zur Spitze des Einschlagdübels reichenden Einschlagdorn,
Figur 2 das Befestigungssystem mit einem Einschlagdübel, dessen Axialbohrung gegenüber der Ausführung von Figur 1 verkürzt ist,
Figur 3 das Befestigungssystem mit einem Einschlagdorn, der nur im Bereich der Grundfläche der Axialbohrung anliegt.

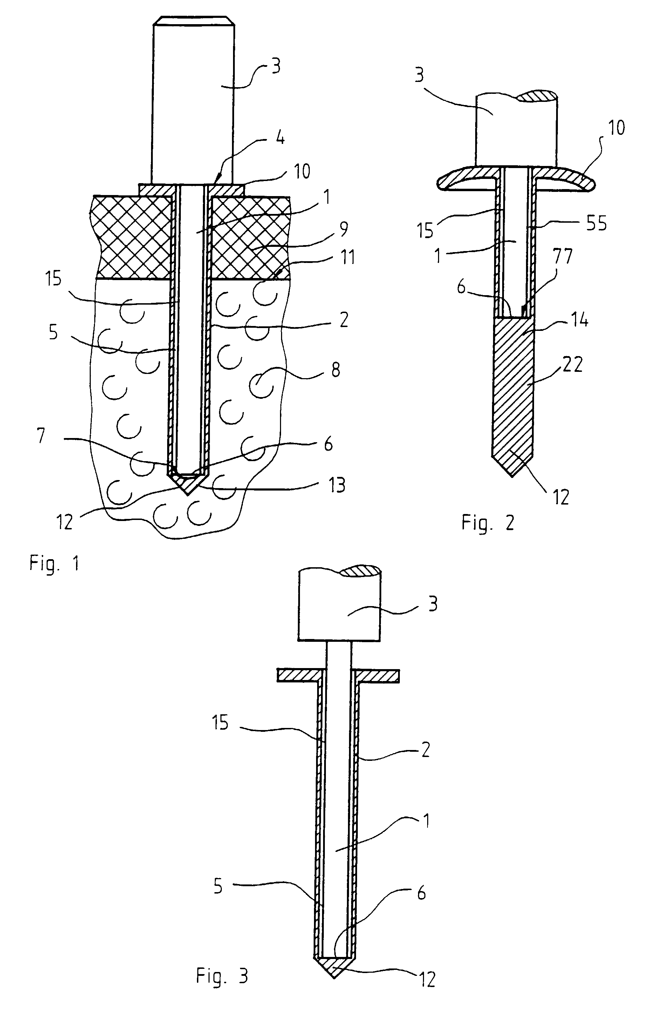

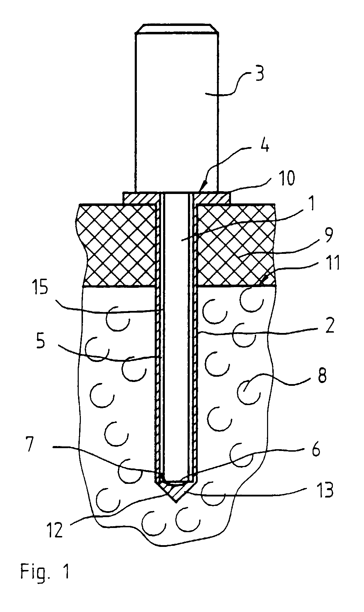

Das in Figur 1 dargestellte Befestigungssystem besteht aus einem Einschlagdorn 1 und einem Einschlagdübel 2. Der Einschlagdorn 1 besitzt an seinem rückwärtigen Ende eine Schafterweiterung in Form eines verbreiterten Einschlagkopfs 3, der im Bereich des Öffnungsrandes 4 des Einschlagdübels 2 an diesem anliegt. Außerdem liegt der Einschlagdorn 1, soweit er sich in einer Axialbohrung 5 des Einschlagdübels 2 erstreckt, mit seinem vorderen flachen Ende 6 an der Grundfläche 7 der Axialbohrung 5 an. Der Einschlagdorn 1 stützt sich somit während des Einschlagvorganges, bei dem mit einem hier nicht dargestellten Hammer auf den Einschlagkopf 3 geschlagen wird, am Öffnungsrand 4 und an der Grundfläche 7 des Einschlagdübels 2 ab. Der Einschlagdübel 2 wird mittels des als Einschlagdorn ausgebildeten Einschlagwerkzeuges durch eine Dämmplatte 9 in das aus Gasbeton bestehende Mauerwerk 8 eingetrieben, bis der Befestigungsflansch 10 an der Dämmplatte 9 zur Anlage kommt und diese mit der Wandoberfläche 11 des Mauerwerks 8 verspannt.

Der Einschlagdübel 2 ist als einstückiges Kunststoffspritzteil hergestellt, wobei seine Spitze 12 einen Kegel aus Vollmaterial bildet. Die Mantelfläche 13 im Bereich der Spitze 12 verläuft im Querschnitt mit einem Winkel von annähernd 90°. Die sich somit ergebende relativ stumpfe Spitze 12 erleichtert das Eintreiben in das Mauerwerk 8 und ist hinreichend stabil, daß sie dem Druck beim Einschlagvorgang standhält.

Bei dem in Figur 2 dargestellten Einschlagdübel 22 ist ein Teil des Dübelschaftes 14 aus Vollmaterial, d.h. ohne Axialbohrung ausgebildet. Die Grundfläche 77 der Axialbohrung 55 befindet sich bei dieser Aufführung im mittleren Bereich des Dübelschaftes 14, wo das vordere Ende 6 des Einschlagdorns 1 zur Anlage kommt.

Der Befestigungsflansch 10 des noch nicht im Mauerwerk verankerten Einschlagdübels 22 ist nach oben gewölbt.

Sobald der Einschlagdübel 22 so weit in das Mauerwerk 8 eingeschlagen ist, wie dies Figur 1 zeigt, wird der gewölbte Befestigungsflansch 10 aufgrund des Anpressdrucks zu einem geraden Flansch aufgebogen, wie dies beispielsweise in Figur 1 dargestellt ist.

Bei der in Figur 3 dargestellten Ausführung ist der in die Axialbohrung 5 eingreifende Einschlagdorn 1 länger als die Axialbohrung 5 ausgeführt, so daß der Einschlagkopf 3 nicht zur Anlage am Einschlagdübel 2 kommt. Damit ist sichergestellt, daß in jedem Fall die Stirnseite des Einschlagdornes 1 auf dem Grund der Axialbohrung 5 aufsitzt.

Bei allen Ausführungen ist ein Luftspalt 15 zwischen dem Einschlagdorn 1 und der Innenwandung des Einschlagdübels 2 bzw. 22 vorgesehen. Dieser Luftspalt 15 entsteht durch unterschiedliche Durchmesser von Einschlagdorn 1 und Axialbohrung 5.

Für bestimmte Anwendungsfälle könnte es auch zweckmäßig sein, diesen Luftspalt kleiner oder auch größer auszubilden, als dies in der Zeichnung vorgesehen ist. Der aus Stahl hergestellte Einschlagdorn 1 gibt dem aus Kunststoff bestehenden Einschlagdübel 2 die erforderliche Stütze beim Einschlagvorgang. Je nach Anwendungsfall könnten jedoch auch andere Materialien für den Einschlagdübel und den Einschlagdorn vorgesehen werden.

## Patentansprüche

1. Befestigungssystem mit einem Einschlagdübel (2) zur Befestigung von Dämmstoffplatten (9) oder anderen Gegenständen an einem Mauerwerk (8) aus Gasbeton oder dergleichen ohne Vorbohren, **dadurch gekennzeichnet,** daß beim Einschlagvorgang ein Einschlagdorn (1) in den eine Axialbohrung (5) aufweisenden Einschlagdübel (2) eingesetzt ist, am Einschlagdübel (2) in axialer Richtung anliegt, und daß der Einschlagdübel (2) eine in Einschlagrichtung zeigende Spitze (12) hat.

2. Befestigungssystem nach Anspruch 1, **dadurch gekennzeichnet,** daß die Spitze (12) als Kegel mit einer Mantelfläche (13) ausgebildet ist, wobei die Mantelfläche (13) im Querschnitt einen Winkel von weniger als 90° bildet.

3. Befestigungssystem nach einem der Ansprüche 1 oder 2, **dadurch gekennzeichnet,** daß die Spitze (12) aus Vollmaterial besteht und der Einschlagdübel (2) eine bis zur Grundfläche (7) der Spitze sich erstreckende zylindrische Axialbohrung (5) hat.

4. Befestigungssystem nach einem der vorhergehenden Ansprüche, **dadurch gekennzeichnet,** daß der Einschlagdübel (2, 22) aus Kunststoff als einstückiges Spritzteil hergestellt ist.

5. Befestigungssystem nach einem der vorhergehenden Ansprüche, **dadurch gekennzeichnet,** daß der Einschlagdorn (1) beim Einschlagvorgang an der Grundfläche (7, 77) der Axialbohrung (5, 55) anliegt.

6. Befestigungssystem nach einem der vorhergehenden Ansprüche, **dadurch gekennzeichnet,** daß der Einschlagdorn (1) an dem Öffnungsrand (4) der Axialbohrung (5) mit einem Einschlagkopf (3) oder einer sonstigen Schafterweiterung anliegt.

7. Befestigungssystem nach einem der vorhergehenden Ansprüche, **dadurch gekennzeichnet,** daß der Einschlagdorn (1) einen kleineren Durchmesser hat als der Durchmesser der Axialbohrung (5).

8. Befestigungssystem nach einem der vorhergehenden Ansprüche, **dadurch gekennzeichnet,** daß der Einschlagdübel (21, 22) einen gewölbten, elastischen Flansch (10) hat, der am Öffnungsrand (4) der Axialbohrung (5) seitlich absteht.

9. Befestigungssystem nach einem der vorhergehenden Ansprüche, **dadurch gekennzeichnet,** daß der in ein Mauerwerk (8) eingeschlagene Einschlagdübel (2, 22) durch einen in dessen Axialbohrung (5, 55) eingesetzten Kern verstärkt ist.

## Claims

1. A fixing system having a drive-in plug (2) for fixing insulating panels (9) or other articles to masonry (8) comprising aerated concrete or similar material without pre-drilling, characterized in that during the driving-in operation a drive-in ram (1) is inserted into the drive-in plug (2), which has an axial bore (5), and bears against the drive-in plug (2) in the axial direction, and the drive-in plug (2) has a tip (12) pointing in the driving-in direction.

2. A fixing system according to claim 1, characterized in that the tip (12) is in the form of a cone having an outer surface (13) forming an angle of less than 90°, viewed in cross-section.

3. A fixing system according to one of claims 1 or 2, characterized in that the tip (12) consists of solid material and the drive-in plug (2) has a cylindrical axial bore (5) extending to the basal face (7) of the tip.

4. A fixing system according to one of the preceding claims, characterized in that the drive-in plug (2, 22) is manufactured from plastics as a one-piece injection-moulded part.

5. A fixing system according to one of the preceding claims, characterized in that the drive-in ram (1) rests on the bottom face (7, 77) of the axial bore (5, 55) during the driving-in operation.

6. A fixing system according to one of the preceding claims, characterized in that a drive-in head (3) or other shank enlargement of the drive-in ram (1) bears against the periphery (4) of the opening of the axial bore (5).

7. A fixing system according to one of the preceding claims, characterized in that the diameter of the drive-in ram (1) is smaller than the diameter of the axial bore (5).

8. A fixing system according to one of the preceding claims, characterized in that the drive-in plug (21, 22) has a bowed resilient flange (10) which projects laterally from the edge (4) of the opening of the axial bore (5).

9. A fixing system according to one of the preceding claims, characterized in that the drive-in plug (2, 22) driven into masonry (8) is reinforced by a core inserted in the axial bore (5, 55) thereof.

## Revendications

1. Système de fixation muni d'une cheville (2) insérable par percussion en vue de fixer des plaques d'isolation (9) ou autres objets, sans percement préalable, à une maçonnerie (8) en du béton cellulaire ou en un matériau similaire, caractérisé par le fait que, lors du processus d'enfoncement par percussion, un mandrin (1) d'enfoncement par percussion est introduit dans la cheville insérable (2) munie d'un canal axial (5), et est appliqué axialement contre la cheville insérable (2) ; et par le fait que la cheville insérable (2) présente une pointe (12) orientée dans la direction d'enfoncement par percussion.

2. Système de fixation selon la revendication 1, caractérisé par le fait que la pointe (12) est réalisée sous la forme d'un cône muni d'une surface d'enveloppe (13), la surface (13) de l'enveloppe formant, en coupe transversale, un angle inférieur à 90°.

3. Système de fixation selon l'une des revendications 1 ou 2, caractérisé par le fait que la pointe (12) consiste en un matériau plein, et la cheville (2) insérable par percussion comporte un canal axial cylindrique (5) s'étendant jusqu'à la surface (7) du fond de la pointe.

4. Système de fixation selon l'une des revendications précédentes, caractérisé par le fait que la cheville (2, 22) insérable par percussion est fabriquée en matière plastique, sous la forme d'une pièce monobloc venue d'injection.

5. Système de fixation selon l'une des revendications précédentes, caractérisé par le fait que, lors du processus d'enfoncement par percussion, le mandrin (1) d'enfoncement par percussion porte contre la surface (7, 77) du fond du canal axial (5, 55).

6. Système de fixation selon l'une des revendications précédentes, caractérisé par le fait que le mandrin (1) d'enfoncement par percussion est appliqué, par une tête (3) d'enfoncement par percussion ou par un renflement d'un autre type ménagé sur son fût, contre le rebord (4) de l'ouverture du canal axial (5).

7. Système de fixation selon l'une des revendications précédentes, caractérisé par le fait que le mandrin (1) d'enfoncement par percussion présente un diamètre plus petit que le diamètre du canal axial (5).

8. Système de fixation selon l'une des revendications précédentes, caractérisé par le fait que la cheville (21, 22) insérable par percussion comporte une collerette élastique bombée (10), faisant saillie latéralement sur le rebord (4) de l'ouverture du canal axial (5).

9. Système de fixation selon l'une des revendications précédentes, caractérisé par le fait que la cheville (2, 22) insérable par percussion, enfoncée par percussion dans une maçonnerie (8), est renforcée par un noyau intégré dans son canal axial (5, 55).
